# EUROPEAN PATENT SPECIFICATION

(11) **EP 2 208 685 B1**
(45) Date of publication and mention of the grant of the patent: **27.06.2012**
(21) Application number: 07827958.5
(22) Date of filing: 29.10.2007
(51) Int. Cl.: B65D 65/40, B32B 27/32, B65D 85/76

(54) **FILM FOR FOOD PACKAGING**
FOLIE ZUR LEBENSMITTELVERPACKUNG
FILM DE CONDITIONNEMENT DE NOURRITURE

(43) Date of publication of application: 21.07.2010
(73) Proprietor: Shikoku Kakoh Co., Ltd., Kagawa 769-2797 (JP)
(72) Inventor: MITANI, Masanori, Higashikagawa-shi Kagawa 769-2797 (JP); MATSUURA, Ryo, Higashikagawa-shi Kagawa 769-2797 (JP); TAKEBAYASHI, Kazuhito, Higashikagawa-shi Kagawa 769-2797 (JP)
(74) Representative: Woods, Geoffrey Corlett
(86) International application number: PCT/JP2007/001179
(87) International publication number: WO 2009/057181

(56) References cited:
- EP-A1- 0 561 428
- WO-A1-01/03921
- WO-A1-97/30847
- WO-A1-2007/073895
- JP-A- 10 000 750
- JP-A- 2003 088 344
- JP-A- 2003 311 899
- JP-A- 2004 098 454
- US-A- 4 724 185

## Description

### TECHNICAL FIELD

The present invention relates to a food packaging film. More specifically, the present invention relates to a food packaging film which is excellent in workability, processability, productivity, gas barrier properties, low-temperature heat sealing properties, safety and mechanical strengths, can be used as an alternative film to generally used cellophane/wax films, and can be suitably used as a packaging film for melting cheese.

### BACKGROUND ART

When producing processed cheese, a cellophane/wax film which is a sheet film and produced by coating the wax onto the surface of cellophane (for example "Paraseal" (registered trademark) manufactured by NIKKAN INDUSTRIES Co., Ltd.) is usually used, and first, a block of processed cheese packaged with the cellophane/wax film (about 1 to 10 kg weight) is produced. Concretely, the cellophane/wax film is folded to a box-like shape and fixed to the inside of a stainless cheese forming case, a prescribed amount of melted cheese at 80 to 90°C are fed thereinto, the cellophane/wax film is folded so as to remove air bubbles to package the cheese, a stainless case cover is set thereon, and the case is turned over. The inside and outside surfaces of film is fusion-sealed by the wax which is melted by the heat and weight of cheese so that the cheese is air-tightly packaged (for example, refer to Patent Documents 1 and 2). A block of cheese after refrigeration storage and solidified (block cheese) is taken out from the stainless case, the block cheese is processed to a desired shape, and finally, the cellophane/wax film package is removed therefrom.

Although the above cellophane/wax film has an advantage that the sealing can be made by the heat and weight of cheese, there are problems that (1) the cellophane/wax film is poor in the mechanical strength so that it is easy to break and foreign matters are got inside thereof; (2) when the melted wax is leaked out from the cellophane/wax film and adhered to the shaping case, it is difficult to take out the block cheese from the shaping case to deteriorate the workability; (3) although the melted wax is not harmful, there is a possibility to remain the wax on the surface of cheese and it is not preferable; and (4) by the relationship between the used cellophane and wax, blue-color printing is impossible so that it is difficult to find any scratches (usually, in food packaging, blue-colored packaging materials are used for preventing any foreign matters from getting inside.

As replacements of cellophane/wax film, there has been proposed a film using a plastic film instead of cellophane so as to enhance the mechanical strengths (for example, refer to Patent Document 2). However, since this still uses wax for air-tightening, the above problems (2) and (3) are still not overcome.

Further, there has been proposed a process for air-tightening by using a film having heat seal property and heat sealing thereof (for example, refer to Patent Document (3) and this process is used for individually-packaging of sliced cheese. However, in this process, any extra film portion is necessary to provide heat sealed portions, and when the heat sealing thereof is not conducted under deaeration, air is remained between the cheese and film so that this leads to getting moldy. Also, this operation under deaeration is a major hurdle in the workability. Further, in this process, since any extra film portion such as heat sealed portions is required, there is a possibility that traces and wrinkles caused by the extra film portion are formed on the surface of cheese so that loss of cheese content and deterioration of product value are caused. Therefore, it is difficult to apply this process to packaging of cheese block.

Further, there is unknown a packaging film for block cheese capable of air-tight packaging by fusion-sealing method of envelope formation shape.

Patent document 1: Japanese Utility Model Application Laid-Open (KOKAI) No. 5-35786 Patent document 2: Japanese Patent Application Laid-Open (KOKAI) No. 6-40485 Patent document 3: Japanese Patent Application Laid-Open (KOKAI) No. 10-750

### DISCLOSURE OF THE INVENTION

### PROBLEM TO BE SOLVED BY THE INVENTION

The present invention has been made so as to overcome the above problems, an object of the present invention is to provide a food packaging film which can be heat-sealed by heat of fed melted food having a temperature of not lower than 60°C and lower than 90°C such as melted cheese without other heat-sealing operation, which can be used as an alternative film to generally used cellophane/wax films, and can be suitably used as a packaging film for melting cheese, and which is excellent in workability, processability, productivity, gas barrier properties, low-temperature heat sealing properties, safety and mechanical strengths. Especially, an object of the present invention is to provide a food packaging film capable of solving a problem of poor mechanical strengths which is a problem of conventional plastic films for packaging block cheese (a part of broken piece of film is remained on the surface when removing the film), a problem of delamination of adhesive layer (by heat or oil of content), and a problem that in case of using a colored resin added into the heat seal layer instead of printing so as to preventing from remaining broken film pieces, the coloring pigment is transferred and attached to the content by heat of content, as well as capable of remarkably reducing the cost to be increased by coating step and printing step.

### MEANS FOR SOLVING THE PROBLEM

As a result of present inventors' earnest study to solve the above problems, it has been found that by a film comprising at least five layers of a heat seal layer/an adhesive layer/a gas barrier layer/an adhesive layer/a heat seal layer, which heat seal layers comprise a specific resin, the above problems can be solved. Thus, the present invention has been attained on the basis of the above finding.

In an aspect of the present invention, there is provided a food packaging film comprising at least five layers of a heat seal layer/an adhesive layer/a gas barrier layer/an adhesive layer/a heat seal layer, which heat seal layers comprise an olefin-based resin and melt at not lower than 60°C and lower than 90°C.
In one embodiment, the heat seal layer comprises 40 to 100% by weight of polyethylene obtained by polymerization in the presence of a metallocene catalyst.
In another embodiment, the heat seal layer comprises 40 to 75% by weight of polyethylene having a density of less than 0.905 g/cm³ and obtained by polymerization in the presence of a metallocene catalyst, and 25 to 60% by weight of low-density polyethylene having a density of not less than 0.905 g/cm³.
Preferably, the polyethylene obtained by polymerization in the presence of a metallocene catalyst has a melting point of 60 to 70°C.
It is also preferred that the heat seal layer comprises 40 to 95% by weight of the olefin-based resin and 5 to 40% by weight of an anti-blocking agent and/or a lubricant.
It is further preferred that the adhesive layer comprises an unsaturated carboxylic acid-modified polyolefin.
It is additionally preferred that the food packaging film is a melting cheese packaging film.
It is also preferred that the oxygen permeability of food packaging film at 23°C under 75% RH is not more than 120 cc/m²·24h·atm.
It is further preferred that the food packaging film is a colored food packaging film.
Also provided is the use of a film of the invention as a food packaging film. Preferably, such a food packaging film is a melting cheese packaging film.

### EFFECT OF THE INVENTION

Since the food packaging film according to the present invention is excellent in workability, processability, productivity, gas barrier properties, low-temperature heat sealing properties, safety and mechanical strengths, it can be used as an alternative film to generally used cellophane/wax films, and can be suitably used as a packaging film for foods such as melting cheese.

### PREFERRED EMBODIMENT FOR CARRYING OUT THE INVENTION

The present invention is described in more detail below. The food packaging film according to the present invention comprises at least five layers of a heat seal layer/an adhesive layer/a gas barrier layer/an adhesive layer/a heat seal layer. By having the above five layers structure in the film, various folding shapes and air-tight sealing form can be practiced regardless of which sides of film are selected because the heat seal layers are provided at the both surfaces of film. At least other optional layer may be inserted between the above optional contacting layers, respectively.

As the above gas barrier layer, there is no limitation as long as the layer has gas barrier property. As the resin constituting the gas barrier layer, there are exemplified polyamides (PA), ethylene-vinyl alcohol copolymer (EVOH), polyethylene terephthalate (PET), polyethylene naphthalate (PEN), polycarbonates (PC), or the like. Of these, polyamides (PA) and ethylene-vinyl alcohol copolymer (EVOH) are preferred, especially polyamides (PA, nylons) are preferred. As the polyamide, there are exemplified nylons 4, 6, 7, 8, 11, 12, 6·6, 6·10, 6·11, 6·12, 6T, 6/6·6, 6/12, 6/6T, 6I/6T, MXD6, or the like.

When fill the melting cheese into the box-shaped film, the film may become not elastic by softening due to steam generated from the melting cheese (for example 50°C) so that the film folds undesirably and the filling the cheese may be troubled. Therefore, it is preferred to use a material which is not affected by the steam generated from the filling food. Further, after filling the melting cheese and the film is heated thereby at not lower than 60°C, if the film is sufficiently softened, it is difficult to form fold lines and the film become a tunnel-like shape structure. Namely, it is required for the film that during filling the melting cheese, the film need to be elastic so as not to fold thereby, when folding and packaging the melting cheese, the film need to be softened so as to completely fusion-seal it. In view of the above, of these polyamides, MXD6 is especially preferred because of heat-resistance rigidity temperature is suitable to the above range.

The thickness of gas barrier is usually 2 to 50 µm, preferably 4 to 30 µm. When the thickness of gas barrier is less than 2 µm, the film is not elastic, in case of used for cheese packaging, the film may be folded during feeding melting cheese so that the melting cheese may not be filled. When the thickness of gas barrier is more than 50 µm, although the film is elastic, the heat from the melting cheese may not be transferred when heat-sealing by folding the film present in upper side of cheese so that the heat sealing may not be completed. It is preferred that the gas barrier layer comprises not less than 70% by weight of resin having a density of not less than 0.9150 g/cm³. In this embodiment, it can be prevented that low molecular compounds such as a pigment and/or dye used in coloring the gas barrier layer exude onto the film.

In the food packaging film according to the present invention, the adhesive layer is required so as to adhere the above gas barrier layer and heat seal layer. The adhesive layer preferably comprises adhesive resin layer comprising a modified polyolefin resin. The modified polyolefin resin is produced by copolymerizing or graft polymerizing α,β-unsaturated carboxylic acid or derivatives thereof to a polyolefin resin which comprises ethylene and/or propylene as the mainly component.

As the above polyolefin resin, there are exemplified polyethylene, polypropylene, ethylene-propylene copolymer, ethylene-butene-1 copolymer, ethylene-vinylacetate copolymer, ethylene-acrylic acid copolymer, ethylene-ethylacrylic acid copolymer, ethylene-sodium acrylate copolymer, or the like.

As the above copolymerized α,β-unsaturated carboxylic acid or derivatives thereof, there are exemplified acrylic acid, methacrylic acid, sodium acrylate, zinc acrylate, vinylacetate, glycidylmethacrylate, or the like. These are contained in the molecular chain in a range of not more than 40 mol%. As examples of copolymerized modified polyolefin resin, ethylene-vinylacetate copolymer, ethylene-acrylic acid copolymer, ethylene-ethylacrylic acid copolymer, ethylene-sodium acrylate copolymer,

As the above grafted α,β-unsaturated carboxylic acid or derivatives thereof, there are exemplified acrylic acid, methacrylic acid, ethacrylic acid, maleic acid, fumaric acid, anhydrides thereof and esters thereof. Of these modifying compounds, maleic anhydride is especially preferred. Further, the graft percentage is selected from a range of 0.01 to 25% by weight, preferably 0.05 to 1.5% by weight.

The graft polymerization is conducted by an ordinary method. Usually, it is conducted by melt-mixing a polyolefin resin and α,β-unsaturated carboxylic acid or derivatives thereof at a resin temperature of 150 to 300°C. In the graft polymerization, in order to conduct the reaction effectively, an organic peroxide such as α,α'-bis-t-butylperoxy-p-diisopropylbenzene is blended thereinto at an amount of 0.001 to 0.05% by weight.

The thickness of adhesive layer is usually not less than 2 µm, preferably 3 to 20 µm. When the thickness of adhesive layer is less than 2 µm, the adhesive property between the gas barrier layer and adhesive layer is poor so that there is a possibility that the heat seal layer is released from the gas barrier layer when the heat seal layer is fused by the heat of melted cheese. When the adhesive layer is too thick, the production cost is increased while the adhesive property is no longer improved more. Further, it is preferred that 70% by weight or more of the resin constituting the adhesive layer comprises a resin having a density of not less than 0.9150 g/cm³. In this embodiment, it can be prevented that low molecular compounds such as a pigment and/or dye used in coloring the gas barrier layer exude onto the film surface through the adhesive layer.

The heat seal layer comprises an olefin-based resin whose constituting material is not limited as long as it can be fused at not lower than 60°C and lower than 90°C, preferably 60 to 80°C, more preferably 60 to 70°C and can be used for food packaging. As the above material, there are exemplified low density polyethylene (hereinafter may be abbreviated as "LDPE"), polypropylene (PP) and polyethylene obtained by polymerization in the presence of a metallocene catalyst (hereinafter may be abbreviated as "M-LLDPE"). Further, in case where a material having a melting point higher than the above defined range as it is, the melting point may be adjusted to the above defined range by blending the other resin thereinto to depress the melting point.

The heat seal layer is fusion-sealed by the heat of food and acts to air-tightly package the food. In addition, in case where any layer other than the heat seal layer is colored, the heat seal layer acts to prevent from migrating the coloring agent to the food surface by the heat of food. Namely, by the presence of heat seal layer, it is possible to use a colored film as the gas barrier layer so that the printing step on the film surface so as to find any film breaking is not required and then, it is possible to reduce the post-processing and cost significantly.

In the above materials, M-LLDPE is preferred because it is less sticky due to less content of low molecular weight components and smell-less. It is more preferred that the heat seal layer comprises 40 to 95% by weight of M-LLDPE. M-LLDPE is a linear low-density polyethylene resin, namely copolymer of ethylene with α-olefin having carbon number of 3 to 13 (ethylene content: 86 to 99.5 mol%), which M-LLDPE is obtained by gas-phase process, liquid-phase process or solution process in the presence of metallocene catalyst (single-site catalyst). As concrete examples of α-olefin, there are mentioned propylene, butene-1, hexene-1, 4-methylpentene-1, octene-1, decene-1 and dodecene-1. The melt index (MI) of M-LLDPE is usually 0.1 to 20 g/10min (230°C). M-LLDPE has a ratio (Mw/Mn) of weight average molecular weigh (Mw) to number average molecular weight (Mn) is usually 1.5 to 4.0, preferably 2 to 3.5 and a polymer having a sharp molecular weight distribution and sharp composition distribution is preferred.

The melting point of M-LLDPE is usually 60 to 70°C, preferably 60 to 65°C. When the melting point of M-LLDPE is lower than 60°C, there is a possibility that the film is fusion-sealed during storage thereof in summer. When the melting point of M-LLDPE is higher than 70°C, it may be difficult to fusion-seal thereof at 70 to 90°C. As described above, since M-LLDPE is a homogeneous polymer having the sharp molecular weight distribution and sharp composition distribution and has the less content of low molecular weight components, M-LLDPE has such a property of rapid fusion-sealing at the fusion-sealing temperature of the film according to the present invention.

The density of M-LLDPE is usually not less than 0.805 and less than 0.905 g/cm³, preferably 0.805 to 0.880 g/cm³. When the density of M-LLDPE is not less than 0.905 g/cm³, it may be difficult to fusion-seal at the temperature of 70 to 90°C. Although the density of M-LLDPE of less than 0.805 g/cm³ is possible, such product may be difficult to availability.

The melt flow rate (MFR) of M-LLDPE is usually 0.5 to 15.0 g/10min, preferably 0.8 to 5.0 g/10min. When the MFR is less than 0.5 g/10min, the extruder tends to be overloaded and the resin tends to be heated so that fish eye and gelation tend to occur. When the MFR is more than 15.0 g/min, it may be difficult to feed the resin into a mold uniformly so that such a problem that the resin is not partially extruded may arise. As the commercial product of M-LDDPE, there is exemplified "Carnel" (trade name) manufactured by Japan Polyethylene Corporation.

As described above, LDPE and PP can be used for the heat seal layer. In case of using LDPE and PP having a melting point of 90°C or higher, the melting point can be adjusted within the above defined range by blending the other resin or blending the same kind resin having lower melting point (for example, M-LLDPE) so as to depress the melting point. Especially, it is preferred that the heat seal layer comprises 40 to 75% by weight of M-LLDPE having a density of less than 0.905 g/cm³ and 25 to 60% by weight of LDPE having a density of not less than 0.905 g/cm³, preferably not less than 0.915 g/cm³_{·}

In the above embodiment (1), as the low-density polyethylene having the density of not less than 0.905 g/cm³, there are exemplified low density polyethylene (hereinafter may be abbreviated as "LDPE") and/or linear low-density polyethylene (hereinafter may be abbreviated as "LLDPE"). LLDPE is a copolymer which comprises ethylene as the mainly component and α-olefin, which has a density of 0.905 to 0.945 g/cm³, and which is produced by various polymerization processes such as gas-phase process, solution process and suspension polymerization process using various catalysts such as Ziegler catalyst, chromium-based catalyst and metallocene catalyst under low/medium pressure or high pressure. As the above α-olefin, there are exemplified propylene, butene-1, hexene-1, octene-1, 4-methylpentene-1, 4-methylhexene-1, 4,4-dimethylpentene-1, nonene-1, decene-1, undecene-1 and dodecene-1.

The melt index rate of the above LDPE and LLDPE according to JIS K721 at 190°C under load of 2.16 kgf is usually 0.05 to 50 g/10 min, preferably 0.1 to 20 g/10min.

Incidentally, as the concrete examples of the above, LLDPE (commercial products), Unipole (by Union Carbide, Corporation), Dowlex (by Dow Chemical Company), Screar (by DuPont Canada), Marlex (by Philips), Neozex and Ultzex (by Mitsui Chemicals, Inc.), Nisseki Linirex (by Nippon Oil Corporation) and Stamirex (by DSM) are mentioned.

Further, by adding an anti-blocking agent and lubricant into the resins such as M-LLDPE, LDPE and PP, the film producibility can be enhanced while maintaining the melting point thereof within the defined range. The amount of anti-blocking agent and lubricant added is usually 5 to 40% by weight, preferably 10 to 30% by weight. When the adding amount of anti-blocking agent and lubricant is more than 40% by weight, the strength of film may be poor, it may be difficult to fusion-seal and the anti-blocking agent and lubricant tend to drop on the cheese surface from the film so that it is not preferable.. When the adding amount of anti-blocking agent and lubricant is less than 5% by weight, blocking of film tends to occur.

The anti-blocking agent and lubricant are not limited as long as having high safety in order to use for a food packaging film, and known organic fine particles and/or inorganic fine particles can be used. As the anti-blocking agent comprising organic fine particles, there are exemplified fine particles comprising homopolymer or copolymer of polystyrene, polyethylene, polyamides, polyesters, polyacrylates, polymethacrylates, epoxy resins, polyvinyl acetate and polyvinyl chloride, which may have any crosslinking agent. On the other hand, as the anti-blocking agent comprising inorganic fine particles, there are exemplified talc, kaolin, silica, calcium carbonate and glass powder. The average particle size of the above anti-blocking agent is usually 1 to 10 µm. Further, the inorganic fine particles may be used in a composition form where they are previously blended to the resin (master batch).

The thickness of heat seal layer is usually 5 to 50 µm, preferably 5 to 30 µm. When the thickness of heat seal layer is less than 5 µm, there may be a possibility of insufficient heat sealing strength at the heat sealing portion. There is no problem when the thickness of heat seal layer is more than 50 µm, however, the thickness is too thick beyond necessity, it is a waste of material and costly.

The thickness of food packaging film according to the present invention is usually 40 to 120 µm, preferably 60 to 100 µm. When the film thickness is less than 40 µm, the film is not elastic, in case of used for cheese packaging, the film may be folded during feeding melting cheese so that the melting cheese may not be filled. When the film thickness is more than 120 µm, although the film is elastic, the heat from the melting cheese may not be transferred when heat-sealing by folding the film present in upper side of cheese so that the heat sealing may not be completed.

Next, the process for producing the feed packaging film according to the present invention is explained. The feed packaging film according to the present invention is preferably produced by coextrusion inflation method to obtain a cylindrical shape laminate film. As the inflation method,there may be employed a known method (water-cooling method) comprising drawing a film formed by extrusion from a cyclic dye to downward of dye, cooling thereof by blowing cooling air to the film, thereafter further quenching thereof with water and winding thereof. Usually, such method comprises using an equipment comprising an airing equipment to blow cooling air to the film placed at downward of cyclic dye, and guide plates and a winding roll placed at downward of the airing equipment sequentially; coextruding plural kinds of material resins from the cyclic dye so as not to stretch the film substantially; cooling the film by passing through the airing equipment; quenching the film with water; feeding the quenched cylindrical shape film to the winding roll through the guide plates to fold thereof; and winding thereof as a laminate film.

The food packaging film according to the present invention can air-tightly heat seal by the heat of fed melting food. Namely, a food melted at 80 to 90°C is fed into the food packaging film according to the present invention whose shape is adjusted to box-like shape and the film is closed so that the film surfaces are fusion-sealed by the heat of food and the film packages the food air-tightly. The food packaging film according to the present invention can be preferably used for packaging a food which is melting state (liquid) at 80 to 90°C when packaging and is solid at ordinary temperature such as another of cheese, chocolate, pudding, jam, marmalade, jelly, and agar-agar. Further, the food packaging film can be used for air-tightly packaging a processed food. For example, a processes food heated at 80 to 90°C is fed into the food packaging film according to the present invention whose shape is adjusted to box-like shape and the film is closed so that the film surfaces are fusion-sealed by the heat of food and the film packages the food air-tightly. As the processed foods, there are exemplified in addition to liquid foods including solids such as stew, curries, and miso soups and prepared meats such as steak, hamburger steak, sausages, and hams, Chinese daily dishes, the Japanese food daily dishes, the European food daily dishes, rice, rice gruels, and rice cakes, etc. Further, the film according to the present invention is preferably used for air-tight packaging of beverage goods as long as processed by the heating sterilization and the extraction at the temperature of 80 to 90°C, such as water, natural water, ion water, health drink, various healthy drinks, various soups, various juices, milks, green tea, teas, coffees, cocoas, and other various soft drinks. Therefore, these embodiments are also within the scope of the present invention.

### EXAMPLES

The present invention is described in more detail below by way of the examples. However, the examples are only illustrative and therefore the present invention is not limited to these examples. In the following Examples , all "parts" and "percents (%)" are by weight unless otherwise noted. The materials used in each Example are shown in the following.

Resin for the gas barrier layer:
(A-1) 6 Nylon ("NOVAMID 1010" manufactured by Mitsubishi Engineering-Plastics Corporation).

Resin for the adhesive layer:
(B-1) Adhesive polyethylene ("Modic-AP M552" manufactured by Mitsubishi Chemical Corporation).

Resin for the heat seal layer:
(C-1) polyethylene (M-LLDPE, density: 0.880 g/cm³, Mw/Mn= 2.3, "Carnel" manufactured by Japan Polyethylene Corporation).

(C-2) Crystalline olefin-ethylene/butylene-crystalline olefin block copolymer (CBEC, density: 0.880 g/cm³, "DYNARON 6200P" manufactured by JSR corporation).

(C-3) Ethylene-α-olefin copolymer (density: 0.870 g/cm³, "TAFMER P0480" manufactured by Mitsui Chemicals, Inc.).

(C-4) Low-density polyethylene (LDPE, density: 0.918 g/cm³ , "NOVATEC LD LF240" manufactured by Japan Polyethylene Corporation).

(C-5) Polypropylene (density: 0.900 g/cm³, "NOVATEC PP FG3D" manufactured by Japan Polypropylene Corporation).

(C-6) Anti-blocking agent (average particle size: 3 µm, 8% zeolite masterbatch "LX-ABI" manufactured by Japan Polyethylene Corporation).

(C-7) Anti-blocking agent (2% erucamide masterbatch "NOVATEC PE-AF" manufactured by Japan Polyethylene Corporation).

The evaluations of food packaging film were conducted by the following methods.

### (1) Evaluation of heat sealing:

After heat sealing of five layers laminated film obtained in each Example at the temperature of 55 to 75°C, under pressure of 1.45 kg/cm³ for 30 seconds, the seal strength thereof was measured according to the method of JIS A 1707. When the seal strength is not less than 3N/15 mm width, the heat sealing is completed.

### Examples 1 to 12:

The above (A-1) as the resin for gas barrier layer, the above (B-1) as resin for the adhesive layer and the resins shown in Tables 1 and 2 as resin (anti-blocking agent) as the heat sealing layer were used respectively, and using a five kinds five layers inflation molding machine (die diameter: 250 mmφ, die lip: 2 mm and die temperature: 240°C), a five layer tubular laminate film comprising heat seal layer (outside)/adhesive layer/gas barrier layer/adhesive layer/heat seal layer (inside) was produced. As the thicknesses of heat seal layers, the thickness of outside seal layer was 20 µm and the thickness of inside seal layer was 28 µm, the thickness of each adhesive layer was 4 mm, the thickness of gas barrier layer was 24 µm, the total thickness of film was 80 µm and folding diameter was 350 mm. To the obtained food packaging film, heat sealing properties at various temperatures were evaluated. The results are shown in Tables 1 and 2.

**Table 1**

| Composition of heat seal layer (% by weight) | | Examples | | | | | |
|---|---|---|---|---|---|---|---|
| | | 1 | 2 | 3 | 4 | 5 | 6 |
| M-LLDPE | C-1 | 95 | 75 | 70 | 65 | 60 | 40 |
| CBEC | C-2 | - | - | - | - | - | - |
| Ethylene-α-olefin copolymer | C-3 | - | - | - | - | - | - |
| LDPE | C-4 | 5 | 25 | 30 | 35 | 40 | 60 |
| PP | C-5 | - | - | - | - | - | - |
| Anti-blocking agent | C-6 | 10 | 10 | 10 | 10 | 10 | 10 |
| | C-7 | 2 | 2 | 2 | 2 | 2 | 2 |
| Heat sealing evaluation at respective heat seal temperatures | 55°C | × | × | × | × | × | × |
| | 60°C | ○ | ○ | × | × | × | × |
| | 65°C | ○ | ○ | ○ | ○ | × | × |
| | 70°C | ○ | ○ | ○ | ○ | × | × |
| ○: Heat sealed | 75°C | ○ | ○ | ○ | ○ | ○ | × |
| ×: Non-heat sealed | 80°C | ○ | ○ | ○ | ○ | ○ | ○ |

**Table 2**

| Composition of heat seal layer (% by weight) | | Examples | | | | | |
|---|---|---|---|---|---|---|---|
| | | 7 | 8 | 9 | 10 | 11 | 12 |
| M-LLDPE | C-1 | 85 | 80 | 85 | 80 | 80 | 80 |
| CBEC | C-2 | - | - | 15 | 20 | - | - |
| Ethylene-α-olefin copolymer | C-3 | - | - | - | - | 15 | 20 |
| LDPE | C-4 | - | - | - | - | - | - |
| PP | C-5 | 15 | 20 | - | - | - | - |
| Anti-blocking agent | C-6 | 10 | 10 | 10 | 10 | 10 | 10 |
| | C-7 | 2 | 2 | 2 | 2 | 2 | 2 |
| Heat sealing evaluation at respective heat seal temperatures. | 55°C | × | × | × | × | × | × |
| | 60°C | × | × | × | × | × | × |
| | 65°C | ○ | × | ○ | × | × | × |
| | 70°C | ○ | ○ | ○ | ○ | ○ | ○ |
| ○: Heat sealed | 75°C | ○ | ○ | ○ | ○ | ○ | ○ |
| ×: Non-heat sealed | 80°C | ○ | ○ | ○ | ○ | ○ | ○ |

## Claims

1. A food packaging film comprising at least five layers of a heat seal layer/an adhesive layer/a gas barrier layer/an adhesive layer/a heat seal layer, which heat seal layers comprise an olefin-based resin and melt at not lower than 60°C and lower than 90°C.

2. A food packaging film according to claim 1, wherein the heat seal layer comprises 40 to 100% by weight of polyethylene obtained by polymerization in the presence of a metallocene catalyst.

3. A food packaging film according to claim 1, wherein the heat seal layer comprises 40 to 75% by weight of polyethylene having a density of less than 0.905 g/cm³ and obtained by polymerization in the presence of a metallocene catalyst, and 25 to 60% by weight of low-density polyethylene having a density of not less than 0.905 g/cm³.

4. A food packaging film according to either claim 2 or claim 3, wherein the polyethylene obtained by polymerization in the presence of a metallocene catalyst has a melting point of 60 to 70°C.

5. A food packaging film according to any one of claims 1 to 4, wherein the heat seal layer comprises 40 to 95% by weight of the olefin-based resin and 5 to 40% by weight of an anti-blocking agent and/or a lubricant.

6. A food packaging film according to any one of claims 1 to 5 wherein the thickness of the heat seal layer is from 5 to 50 µm.

7. A food packaging film according to any one of claims 1 to 6, wherein the gas barrier layer comprises at least one polymer selected from the group consisting of polyamide, ethylen-vinylalcohol copolymer, polyethylene terephthalate, polyethylene naphthalate and polycarbonate.

8. A food packaging film according to any one of claims 1 to 7 wherein the thickness of the gas barrier layer is from 2 to 50 µm.

9. A food packaging film according to any one of claims 1 to 8, wherein the adhesive layer comprises an unsaturated carboxylic acid-modified polyolefin.

10. A food packaging film according to any one of claims 1 to 9 wherein the thickness of the adhesive layer is from 3 to 20 µm.

11. A food packaging film according to any one of claims 1 to 10, wherein the food packaging film is a melting cheese packaging film.

12. A food packaging film according to any one of claims 1 to 11, wherein the oxygen permeability of food packaging film at 23°C under 75% RH is not more than 120 cc/m²·24h·atm.

13. A food packaging film according to any one of claims 1 to 12, wherein the food packaging film is a colored food packaging film.

14. Use of a film as defined by any one of claims 1 to 13 as a food packaging film.

15. Use according to claim 14 wherein the food packaging film is a melting cheese packaging film.

## Patentansprüche

1. Lebensmittelverpackungsfolie, umfassend wenigstens fünf Schichten aus einer Heißsiegelschicht/einer Haftvermittlerschicht/einer Gasbarriereschicht/einer Haftvermittlerschicht/einer Heißsiegelschicht, wobei die Heißsiegelschichten ein olefinbasiertes Harz umfassen und bei nicht niedriger als 60°C und niedriger als 90°C schmelzen.

2. Lebensmittelverpackungsfolie gemäß Anspruch 1, wobei die Heißsiegelschicht 40 bis 100 Gew.-% Polyethylen, das durch Polymerisation in Gegenwart eines Metallocen-Katalysators erhalten wurde, umfasst.

3. Lebensmittelverpackungsfolie gemäß Anspruch 1, wobei die Heißsiegelschicht 40 bis 75 Gew.-% Polyethylen, das eine Dichte von weniger als 0,905 g/cm³ hat und das durch Polymerisation in Gegenwart eines Metallocen-Katalysators erhalten wurde, und 25 bis 60 Gew.-% Polyethylen niedriger Dichte, das eine Dichte von nicht weniger als 0,905 g/cm³ hat, umfasst.

4. Lebensmittelverpackungsfolie gemäß Anspruch 2 oder Anspruch 3, wobei das Polyethylen, das durch Polymerisation in Gegenwart eines Metallocen-Katalysators erhalten wurde, einen Schmelzpunkt von 60 bis 70°C hat.

5. Lebensmittelverpackungsfolie gemäß einem der Ansprüche 1 bis 4, wobei die Heißsiegelschicht 40 bis 95 Gew.-% des olefinbasierten Harzes und 5 bis 40 Gew.-% eines Antiblockierungsmittels und/oder eines Schmiermittels umfasst.

6. Lebensmittelverpackungsfolie gemäß einem der Ansprüche 1 bis 5, wobei die Dicke der Heißsiegelschicht 5 bis 50 µm ist.

7. Lebensmittelverpackungsfolie gemäß einem der Ansprüche 1 bis 6, wobei die Gasbarriereschicht wenigstens ein Polymer, ausgewählt aus der Gruppe, bestehend aus Polyamid, EthylenVinylalkohol-Copolymer, Polyethylenterephthalat, Polyethylennaphthalat und Polycarbonat, umfasst.

8. Lebensmittelverpackungsfolie gemäß einem der Ansprüche 1 bis 7, wobei die Dicke der Gasbarriereschicht 2 bis 50 µm ist.

9. Lebensmittelverpackungsfolie gemäß einem der Ansprüche 1 bis 8, wobei die Haftvermittlerschicht ein ungesättigtes Carbonsäure-modifiziertes Polyolefin umfasst.

10. Lebensmittelverpackungsfolie gemäß einem der Ansprüche 1 bis 9, wobei die Dicke der Haftvermittlerschicht 3 bis 20 µm ist.

11. Lebensmittelverpackungsfolie gemäß einem der Ansprüche 1 bis 10, wobei die Lebensmittelverpackungsfolie eine Schmelzkäse-Verpackungsfolie ist.

12. Lebensmittelverpackungsfolie gemäß einem der Ansprüche 1 bis 11, wobei die Sauerstoffpermeabilität der Lebensmittelverpackungsfolie bei 23°C unter 75% RH nicht mehr als 120 cm³/m²·24h·atm ist.

13. Lebensmittelverpackungsfolie gemäß einem der Ansprüche 1 bis 12, wobei die Lebensmittelverpackungsfolie eine gefärbte Lebensmittelverpackungsfolie ist.

14. Verwendung einer Folie, wie sie in einem der Ansprüche 1 bis 13 definiert ist, als Lebensmittelverpackungsfolie.

15. Verwendung gemäß Anspruch 14, wobei die Lebensmittelverpackungsfolie eine Schmelzkäseverpackungsfolie ist.

## Revendications

1. Film pour emballage de nourriture, comprenant au moins cinq couches, à savoir une couche pour thermoscellage / une couche adhésive / une couche formant barrière aux gaz / une couche adhésive / une couche pour thermoscellage, lesquelles couches pour thermoscellage comprennent une résine à base d'oléfine(s) et fondent à une température d'au moins 60 °C, mais inférieure à 90 °C.

2. Film pour emballage de nourriture, conforme à la revendication 1, dans lequel une couche pour thermoscellage est formée, pour 40 à 100 % en poids, d'un polyéthylène obtenu par polymérisation en présence d'un catalyseur à métallocène.

3. Film pour emballage de nourriture, conforme à la revendication 1, dans lequel une couche pour thermoscellage est formée, pour 40 à 75 % en poids, d'un polyéthylène présentant une masse volumique inférieure à 0,905 g/cm³, obtenu par polymérisation en présence d'un catalyseur à métallocène, et pour 25 à 60 % en poids, d'un polyéthylène basse densité présentant une masse volumique d'au moins 0,905 g/cm³_{.}

4. Film pour emballage de nourriture, conforme à la revendication 2 ou 3, dans lequel le polyéthylène obtenu par polymérisation en présence d'un catalyseur à métallocène présente un point de fusion qui vaut de 60 à 70 °C.

5. Film pour emballage de nourriture, conforme à l'une des revendications 1 à 4, dans lequel une couche pour thermoscellage comprend de 40 à 95 % en poids d'une résine à base d'oléfine(s) et de 5 à 40 % en poids d'un agent anti-blocage et/ou d'un lubrifiant.

6. Film pour emballage de nourriture, conforme à l'une des revendications 1 à 5, dans lequel l'épaisseur d'une couche de thermoscellage vaut de 5 à 50 µm.

7. Film pour emballage de nourriture, conforme à l'une des revendications 1 à 6, dans lequel la couche formant barrière aux gaz comprend au moins un polymère choisi dans l'ensemble formé par les polyamides, copolymères d'éthylène et d'alcool vinylique, poly(éthylène téréphtalate), poly(éthylène naphtalate) et polycarbonates.

8. Film pour emballage de nourriture, conforme à l'une des revendications 1 à 7, dans lequel l'épaisseur de la couche formant barrière aux gaz vaut de 2 à 50 µm.

9. Film pour emballage de nourriture, conforme à l'une des revendications 1 à 8, dans lequel une couche adhésive comprend une polyoléfine modifiée avec un acide carboxylique insaturé.

10. Film pour emballage de nourriture, conforme à l'une des revendications 1 à 9, dans lequel l'épaisseur d'une couche adhésive vaut de 3 à 20 µm.

11. Film pour emballage de nourriture, conforme à l'une des revendications 1 à 10, lequel film pour emballage de nourriture est un film pour emballage de fromage à faire fondre.

12. Film pour emballage de nourriture, conforme à l'une des revendications 1 à 11, lequel film pour emballage de nourriture présente une perméabilité vis-à-vis de l'oxygène, à 23 °C et sous 75 % d'humidité relative, d'au plus 120 cm³/m².24h.atm.

13. Film pour emballage de nourriture, conforme à l'une des revendications 1 à 12, lequel film pour emballage de nourriture est un film pour emballage de nourriture coloré.

14. Utilisation d'un film, conforme à l'une des revendications 1 à 13, en tant que film pour emballage de nourriture.

15. Utilisation conforme à la revendication 14, dans laquelle le film pour emballage de nourriture est un film pour emballage de fromage à faire fondre.
